# EUROPEAN PATENT SPECIFICATION

(11) **EP 3 228 754 B1**
(45) Date of publication and mention of the grant of the patent: **11.01.2023**
(21) Application number: 17165137.5
(22) Date of filing: 05.04.2017
(51) Int. Cl.: E02B 17/00, F03D 13/25, E02D 27/52, B63B 21/27, E02D 31/00

(54) **SCOUR PROTECTION FOR SUCTION PILE, E.G. PILE LOWERING OPERATED**
KOLKSCHUTZ FÜR SAUGPFAHL, Z. B. PFAHLSENKUNGSBETRIEBEN
PROTECTION CONTRE L'ÉROSION POUR PILE À SUCCION, PAR EXEMPLE, PILE À ABAISSEMENT ACTIONNÉ

(30) Priority: 05.04.2016 NL 2016555
(43) Date of publication of application: 11.10.2017
(73) Proprietor: SPT Equipment BV, 3447 GW Woerden (NL)
(72) Inventor: Dijkstra, Oene Jeljer, 3447 GW Woerden (NL); Buykx, Stefan, 3447 GW Woerden (NL)
(74) Representative: Arnold & Siedsma

(56) References cited:
- EP-A1- 2 767 637
- WO-A1-2005/038146
- CN-A- 103 132 521
- GB-A- 2 024 901

## Description

The present disclosure relates to a suction pile, a foundation made from one or more suction piles and an offshore structure, e.g. an above the sea water projecting wind turbine, resting on a foundation comprising one or more suction piles.

Suction piles and their way of installing are a.o. known from GB-B-2300661 and EP-B-0011894, which disclosures are enclosed in here by reference.

Suction piles may suffer from scouring of the seabed around them. To avoid scouring it is known to cover the seabed by a layer of loose rocks or a mat of artificial frond. For piles installed by hammering, several proposals for extendable or unfoldable seabed covering devices mounted to the pile prior to hammering the pile into the seabed are known. Viz. e.g. GB2024901A, EP2767637A1, WO2005038146A1 or GB1537238A. Compared to piles installed by pile-driving, suction piles have a diameter at least twice the pile diameter and a length not more then half the pile length. Thus the technical field of suction piles differ largely from pile-driven piles for an offshore foundation.

### OBJECT OF THE INVENTION

The object of the invention is versatile. In an aspect the reliability of the foundation is improved. In an aspect the installation of the foundation is made quicker and/or cheaper.

The object is obtained by providing the suction pile, preferably near its top bulkhead and possibly at a level spaced below the level of this bulkhead (viewed in the upright condition of the suction pile) with an extendable or unfoldable seabed scour protection device (SSPD) comprising a web (also called screen or mat or cover like device or sheet or foil or cover device or cover material) to cover or screen, when extended or unfolded, the seabed adjacent the suction pile to avoid scouring, as according to claim 1. This SSPD is preferably mounted to the suction pile before the suction pile is lowered onto the seabed, e.g. while the suction pile completely or partly projects above the water or is located on a vessel or at an on shore location.
The SSPD is mounted at such level that it remains above the seabed once the suction pile is installed into the seabed.

Preferably the SSPD is designed to be unfolded by a translating movement of one of its edges, preferably a free edge (e.g. the edge that is wound onto the roll last, which edge could also be called leading edge), e.g. a movement similar to unwinding a rolled web by pulling at its free end. Such unfolding can be provided by a pushing means, e.g. bearing against the suction pile. In an alternative unfolding can be obtained by pulling at the leading edge with a pulling means, e.g. remote from the suction pile, e.g. a cable e.g. extending from a vessel, to unroll the screen. In a further alternative unfolding can be gravity powered, e.g. due to descending of the SSPD or part of it.

The SSPD, when retracted or folded or collapsed, is preferably rolled or creased or pleated or differently stored to a small dimension, to preferably have an extension less than 10% or 20% compared to its extension when unfolded. Thus, e.g., the SSPD unfolds or extends or stretches similar to the screen web of a roller blind or pleated curtain or an umbrella or parasol.

If unfolded the SSPD preferably has one or more of: covers at least 2 or 5 metres seabed radially from the outer wall of the suction pile; covers a substantially rectangular or circular seabed area, preferably completely around the suction pile, e.g. without gaps or continuously, adjacent the suction pile; it, or part of it, slopes towards the seabed. Preferably a plurality of SSPD' s are provided circumferentially, possibly such that they partly overlap or connect side to side if unfolded.

As an example the SSPD is constructed similar to an articulated awning, e.g. comprising a roll of sheet like cover material and one, two or more articulated arms that, by unfolding, move the free edge of the cover material away from the roll thus unrolling the cover material into an unfolded or stretched condition, wherein the roll and the one end of the articulated arm are fixed to the suction pile such that the roll can unwind and the articulated arm can pivot to extend or unfold. Preferably the articulated arm carries out its extending movement in a plane substantially parallel to the plane of the unfolded part of the cover material, which plane is typically substantially horizontal (viewed in the upright condition of the suction pile) . Preferably the articulated arm has one or more, e.g. at least two or three, upright pivot axes, e.g. a pivot axis at one or both longitudinal ends and/or one remote from these ends.

An alternative to an articulated arm is a scissor like structure or a pantograph like structure. Another alternative actuator to unfold the SSPD is a telescoping arm.

The web preferably has one or more of: comprises a woven or non woven fabric; heavy elements, e.g. rocks can be integrated, as a ballast means, e.g. in or along the web; a rough surface, e.g. artificial frond, to collect and retain sand from the seabed; is one or more of: pliable, flexible, wrinkable, rollable, foldable, preferably in a supple manner; can be folded and unfolded like a cloth; is a textile or textile like product; is a fibre like or fibre product; comprises pin or strip shaped elements, e.g. providing an artificial frond; it and/or the pin or strip shaped elements is made of rubber or rubber like material and/or has varying stiffness over its length.

The sheet like element e.g. can be rolled or folded, e.g. accordion like, in the retracted condition. A preferred mat can be obtained with Seabed Scour Control Systems Ltd, Norfolk, (UK), sold as SSCS Frond Mat.

A SSPD preferably has one or more of: a preferably straight storage means to store the cover like device, e.g. rolled or pleated; at the leading edge of the cover like device a ballast means, e.g. a straight profile of e.g. metal; an actuator means, e.g. articulated arm, to move the leading edge, e.g. away from the storage means, to unfold the SSPD; if unfolded the cover like device is inclined.

The length or height of the suction pile is the direction parallel to the direction of movement of the suction pile while it progressively penetrates the sea bed, thus the direction of the body axis or the direction from the top to the bottom.

To unfold, the SSPD can have one or more of: a drive means, e.g. a spring or hydraulics, to drive the actuator means; a guiding means to guide the cover like device, which guiding means could be integrated with the actuator means; a tilting means allowing tilting of the SSPD to obtain the cover like device to slope towards the seabed, e.g. due to ballast means, or to positively tilt the SSPD by tilting drive means, e.g. hydraulic or mechanic, to obtain said slope.

Separate from or in combination with one or more above and/or below disclosed features, the invention also relates to an SSPD with one or more of the following: designed for extension by an object separate from the SSPD, e.g. seabed contact, or by progressively penetration of the sea bed by the suction pile; has elongated elements, e.g. outrigger arms, which slide along the suction pile or make a translating movement during extension or unfolding of the SSPD; comprises rigid web carrying arms, e.g. outrigger arms, which in the extended state preferably extend radially from the suction pile or perpendicular to the length or height direction of the suction pile and preferably substantially horizontal or lying, and/or in the retracted state preferably extend substantially vertical or upright or parallel to the length or height direction of the suction pile; when moving from retracted to extended state the spacing between the ends of arms of it, e.g. distal from the suction pile, increases such that the to these arms mounted web preferably becomes unfolded and/or stretched; the web is mounted to arms at locations spaced along these arms; suspension arms the one end of which is pivotably mounted to the suction pile at fixed locations, the opposite end of which is pivotably mounted, e.g. approximately midway, between the ends of the outrigger arms which carry the foil; the one end of the outrigger arms is bifurcated or fork like and/or slide upward along the suction pile during unfolding the SSPD; the sliding movement is caused by the seabed, e.g. since the distance between the top of the suction pile and the seabed decreases due to progressive penetration of the suction pile during its installation; the orientation of the outrigger arms changes from virtually vertical or upright to substantially horizontal or lying to extend radially from the suction pile; the fixedly to the outrigger arms mounted foil unfolds in a way similar to the cloth of an unfolding umbrella or parasol and/or becomes stretched by the outrigger arms as soon as the SSPD arrives at its completely unfolded state; the suspension arms slide with one end along the suction pile; the preferably bifurcated end of the outrigger arms is pivotably mounted to the suction pile preferably at fixed location; the suspension arms are forced by the relative movement between suction pile and seabed; gravity force and one or more of arms and hooking parts of the SSPD and/or suction pile keep the SSPD biased towards the folded or retracted state; gravity force and supporting means, e.g. the sea bed, bias the SSPD towards the extended state; completely separate from the suction pile, in other words no fixed connection; circumferentially encircles the suction pile, preferably completely; provides a partially, substantially or completely closed loop around the suction pile; has substantial form fit with the suction pile; can, preferably freely, translate lengthwise of the suction pile (thus vertically if the suction pile is oriented vertically as in operation); is retained in one or more translation directions, e.g. horizontally if in operation, different from vertical or upward; is kept retracted and/or retained from moving up or down along the suction pile by retaining means, preferably releasable, e.g. by hooking parts, e.g. at the SSPD (e.g. hooks or eyes) and/or the suction pile (e.g. hooks or eyes); hooking parts become disengaged as soon as the SSPD is moved, e.g upward or downward, e.g. due to further penetration of the suction pile into the seabed; hooking parts at the outrigger arms, preferably close to the remote ends, preferably engaging hooking parts at the suction pile, preferably close to the top; a hooking part, e.g. a hook, is disengaged, e.g. is lifted from a counter hooking part, e.g. an eye which preferably initiates unfolding or extending the SSPD; extending is provided since the, preferably initially vertically or upright oriented, arms, e.g. outrigger arms, pivot from the one to the second attitude, e.g. become horizontally or lying oriented and/or extend radially from the suction pile; arms, e.g. outrigger arms, pivot downward or upward, e.g. from upright or vertical to lying or horizontal or vice versa; arms, e.g. outrigger and/or suspension arms, pivot or swing, e.g. around a horizontal or lying axis; arms, e.g. the outrigger arms and/or suspension arms have a fixed length and/or rigid shape; arm ends sliding upward or downward along the suction pile are maintained in their mutual angular spacing by a means preferably proper to the SSPD, e.g. provided by the foil or by an elongate element, e.g. a flexible pulling element, e.g. provided as a closed loop around the suction pile, or by rods connected to the arm ends; the foil is stretched at the location of the one arm ends both in the retracted and extended state and/or at the opposite arm ends stretched if extended and unstretched, e.g. folded or loose if retracted; the combination of SSPD and suction pile looks like an umbrella or parasol, and can be folded and unfolded as an umbrella or parasol, wherein de suction pile is functionally equivalent to the central pole of the umbrella; retaining means, e.g. at the suction pile, engage the SSPD and retain the SSPD from downward movement and allow its upward movement along the suction pile, or vice versa.

In accordance with the invention the unfolded SSPD, surrounding the suction pile at a level between the open bottom and closed top, is suspended from hook members fixed to the suction pile in such a manner that with the suction pile in the upright attitude (longitudinal axis vertical, open bottom below closed top) the movement of the SSPD downward and/or outward (of at least the top edge of the SSPD) is retained by the hook members and upward is not retained by the hook members and sufficient upward movement causes that the SSPD becomes outside the retaining influence of the hook members such that the SSPD is released from the hook members to be no longer retained in downward and/or outward movement by the hook members, to move towards the unfoled position. Preferably the hook members have a design to present a retaining edge having an outward radial extension from the suction pile (to retain downward movement of the SSPD) and/or an upward extension at a distance from the suction pile (to retain outward movement of the SSPD) . Preferably the outward radial extension projects from the suction pile and the upward extension connects to the end of the outward radial extension remote from the suction pile. The SSPD is preferably provided with corresponding hook features to properly co operate with the hook members. During unhooking preferably the complete SSPD moves upward along the suction pile, counter to the gravity action.

Preferably, the folded SSPD has a shape similar to a cylinder and the unfolded SSPD a shape similar to a disc with central hole, in both states the suction pile fits within the SSPD.

In an embodiment, the folded SSPD has a first and a second edge close to the suction pile, while the unfolded SSPD has the first edge close to the suction pile and the second edge remote from the suction pile, preferably at least 1 or 2 meter further away compared to the folded state.

Preferably the SSPD is designed such that in the unfolded state the outer edge of the web properly connects to the seafloor to avoid scouring below the web, which in some cases allows that the web keeps a gap with the seafloor, however in other cases such gap is absent.

Preferably one or more of the following applies: the web is present below the outrigger arms such that in the unfolded state the web is between these arms and the seafloor; the outrigger arms ends adjacent the web outer edge have a shape to promote that the web outer edge properly connects to the seafloor, e.g. a tapering shape and/or a downward curved flange; the thickness of the SSPD is smaller, e.g. at least 10% or 20%, at the outer edge away from the suction pile if unfolded compared to its thickness remote from this outer edge, e.g. the inner edge; in the unfolded state the web at the SSPD outer edge is closer to the seafloor, e.g. at least 10% or 20%, compared to its distance remote from this outer edge, e.g. the inner edge, or connects to the seafloor while remote from this outer edge the web is spaced from the seafloor, e.g. at the outer edge the web seafloor distance is between zero and 20 millimeter while remote from the outer edge the web seafloor distance is at least 100 or 200 millimeter, at least at the location of the outrigger arms; the outward outrigger arm end has an element, e.g. flange, extending further longitudinally of the arm compared to another element of it, e.g. web, which element preferably is angled or curved towards the seafloor; the web follows the shape of the outrigger arm, at least at the outward end; the web is ballasted or made heavier at the outer edge, e.g. by stones within e.g. a tube fixed to the web, to bias the web towards the seafloor.

Preferably one or more of the following applies: the diameter of the suction pile is constant over its height (the height is the direction from the top bulkhead towards the opposite open end, which is the direction parallel to the suction pile longitudinal axis); from the top bulkhead the cylinder walls of the suction pile extend parallel; the open end of the suction pile, designed to be located on the sea floor first is completely open, in other words, its aperture is merely bordered by the cylinder walls; the water depth is such that the suction pile is completely below the water surface when its lower end contacts the sea floor, in other words when its lower end has not penetrated the sea floor yet; with the penetration of the suction pile into the sea floor completed, the top bulkhead is spaced from the sea floor.

The suction pile is also preferably provided with known as such valves and/or hatches adjacent or at its top bulkhead for selectively allowing water and air to enter or exit the suction space through the top side of the suction pile.

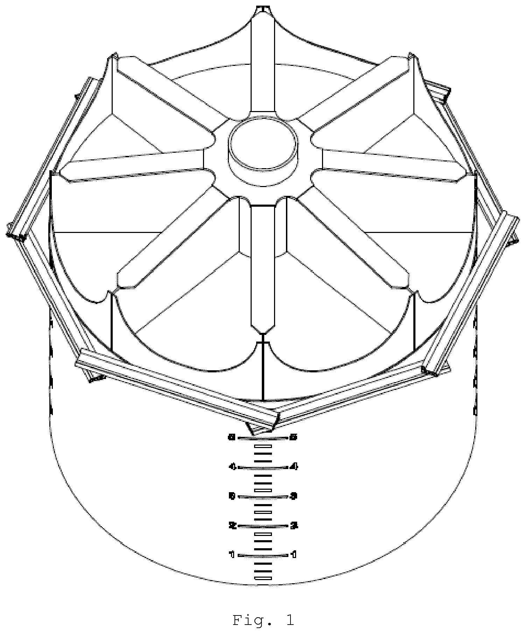

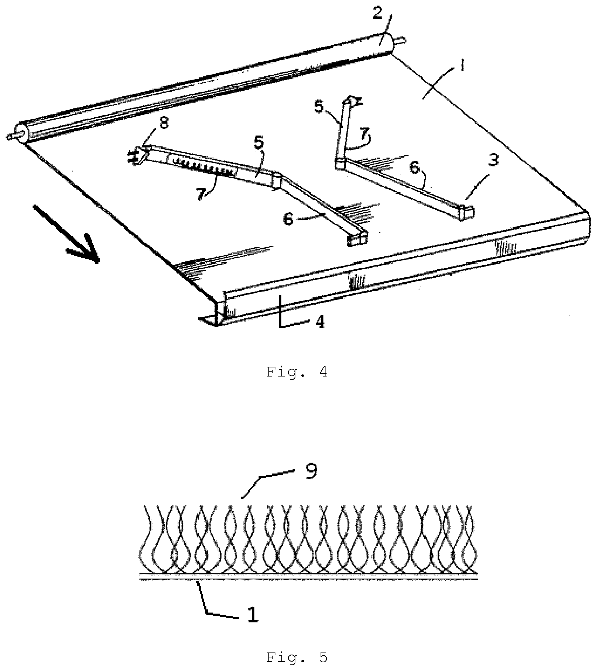

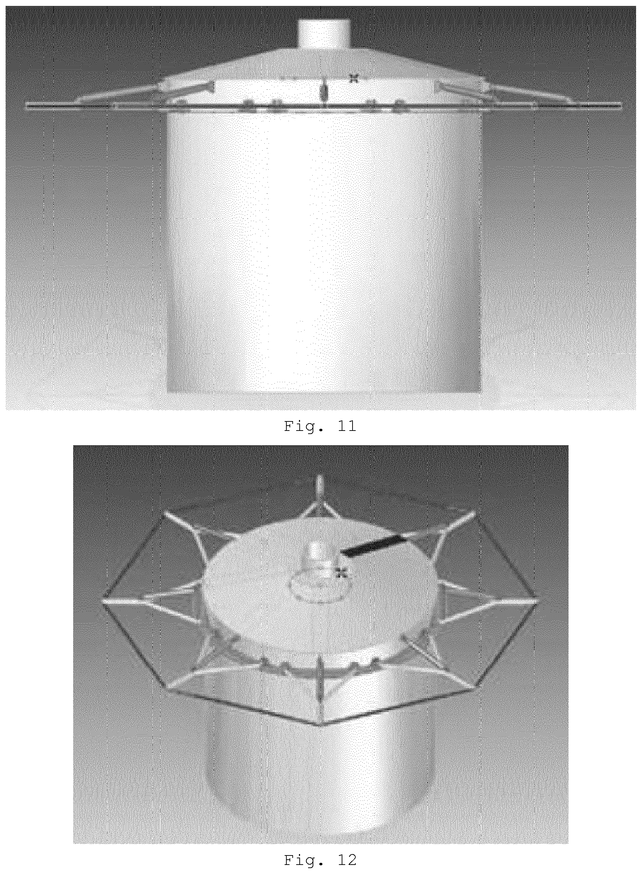

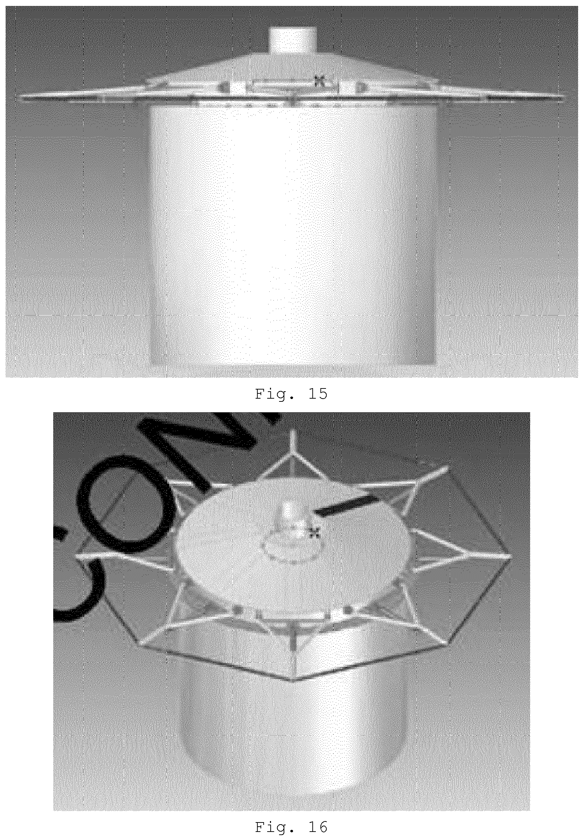

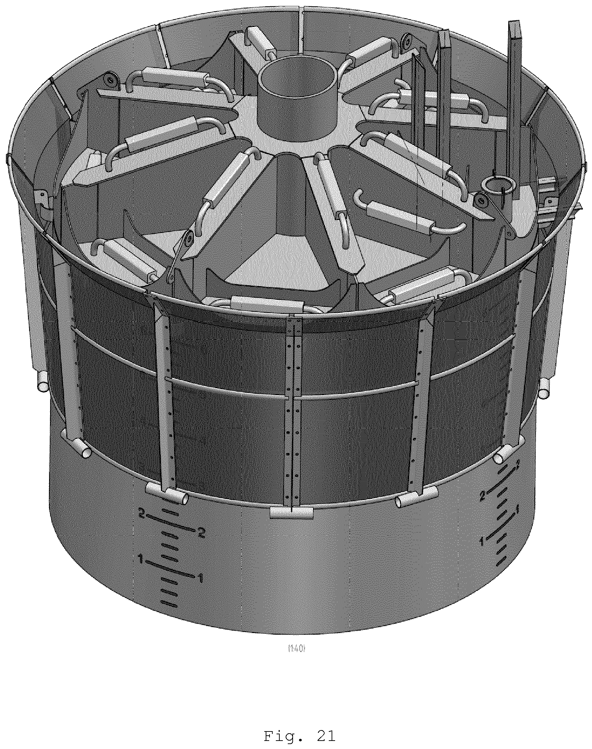

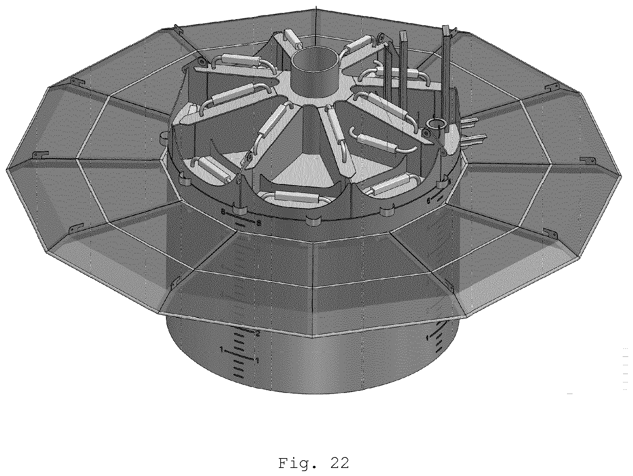

The invention is further illustrated by way of non-limiting, presently preferred embodiments providing the best way of carrying out the invention and shown in the drawings, where it is to be noted that figures 1 to 3, 5, and 17 to 22 show embodiments which are covered by the appended claims, and that figures 4, and 6 to 16 show not claimed examples of the suction pile and SSPD.
Fig. 1 shows a perspective view from above of the retracted state;
Fig. 2 shows in the view similar to fig. 1 the extended state;
Fig. 3 shows a side view of the state of fig. 2;
Fig. 4 shows in exploded view the SSPD in detail;
Fig. 5 shows a detail of the SSPD;
Fig. 6 shows an alternative actuator; and
Fig. 7 and 8 show alternatives for folding the SSPD.
Fig. 9-12 show an alternative SSPD in retracted and extended state;
Fig. 13-16 show a further alternative SSPD in retracted and extended state;
Fig. 17-22 show another alternative SSPD in retracted and extended state in accordance with the invention.

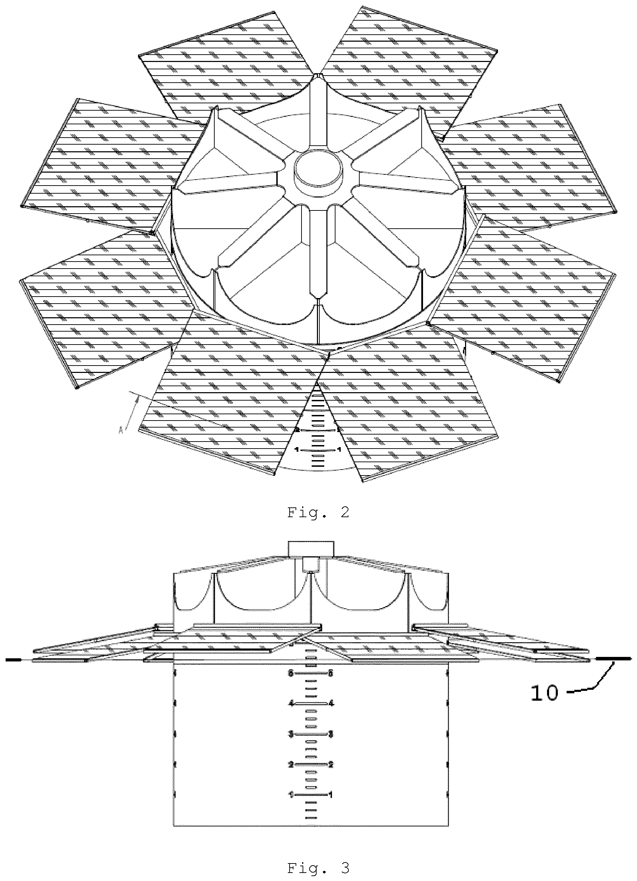

Fig. 1-3 show a suction pile provided with eight awning like SSPD's circumferentially provided. In fig. 1 the SSPD' s are folded, in Fig. 2 and 3 the SSPD' s are unfolded, each covering a rectangular seabed area. Fig. 3 shows the suction pile installed into the seabed 10 and the unfolded SSPD's bear onto the seabed or are located at short distance above it.

Fig. 4 illustrates the partly unfolded SSPD. The web 1 is partly unrolled from the roll 2. This roll 2 is fixed to the outer wall of the suction pile (not shown in fig. 4). The leading edge 4 of web 1 is provided with a heavy profile for ballasting. The guide and actuator is provided by two articulated arms, the end 3 of which is pivoted to the leading edge 4, the end 8 of which is pivoted to the suction pile. The arm parts 5 and 6 are mutually pivoted. A spring 7 biases the arm parts 5, 6 towards elongation, to obtain mutual extension, moving the leading edge 4 away from the roll 2. The arm parts 5, 6 pivot in a plane parallel to the web 1, as with a to a building façade mounted awning providing free underpass.

Fig. 5 shows the web 1 having surface roughness provided by artificial frond 9.

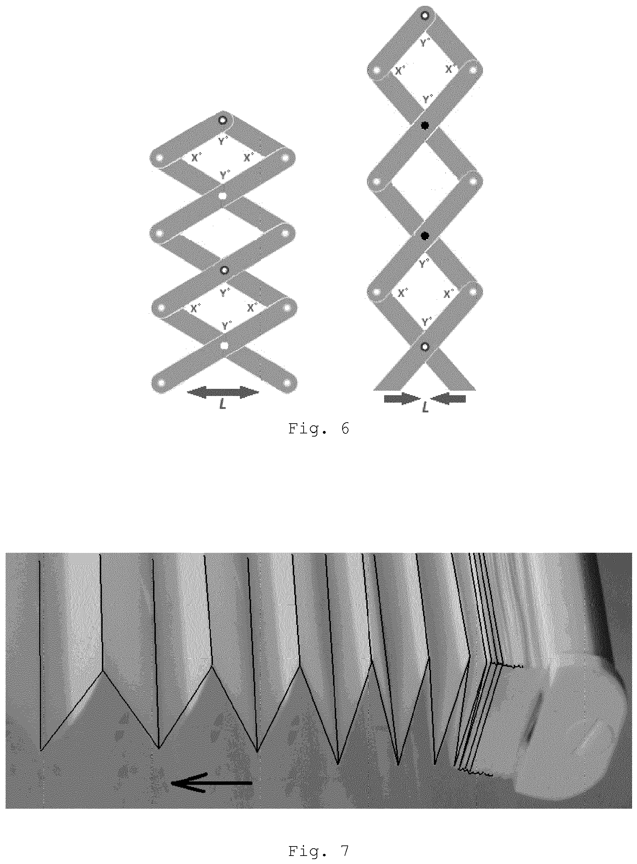

Fig. 6 shows a pantograph as an alternative actuator, illustrated in extended and retracted state.

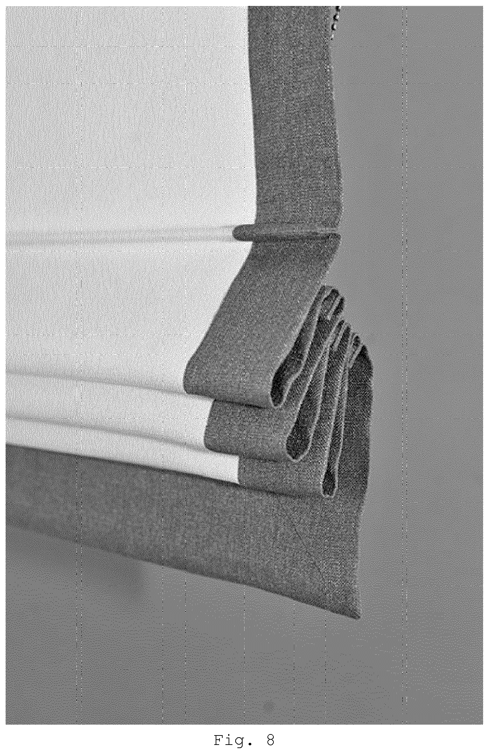

Fig. 7 and 8 show an alternative storage for the web by pleating.

The arrow in fig. 4 and 7 indicates the direction of moving away the leading edge 4 from the storage 2.

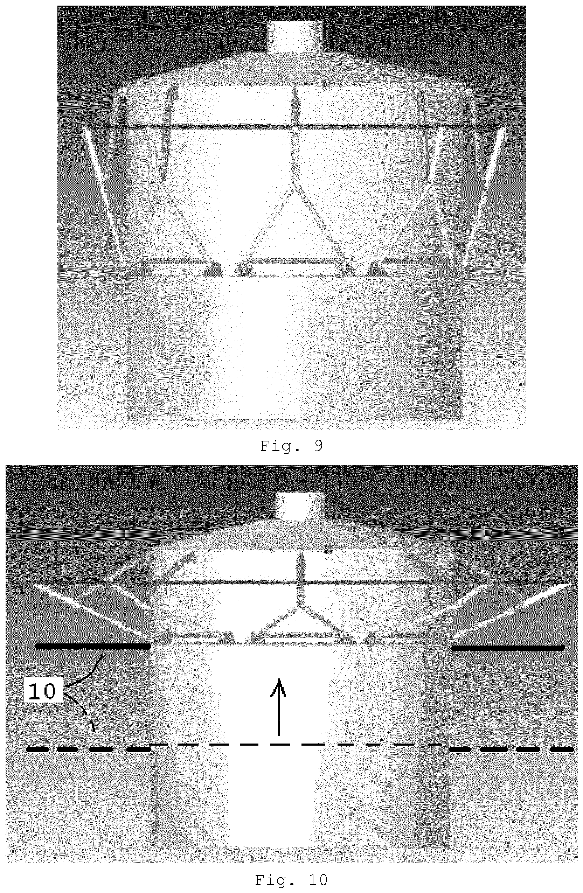

The Fig. 9-22 embodiments are designed for extension by seabed contact and have elongated elements, e.g. outrigger arms, which slide along the suction pile or make a translating movement during extension or unfolding of the SSPD. These embodiments preferably comprise rigid web carrying arms, e.g. outrigger arms, which in the extended state extend radially from the suction pile or perpendicular to the length or height direction of the suction pile and preferably substantially horizontal or lying, while in the retracted state extend substantially vertical or upright or parallel to the length or height direction of the suction pile (the length or height of the suction pile is the direction parallel to the direction of movement of the suction pile while it progressively penetrates the sea bed) . When moving from retracted to extended state the spacing between the ends of these arms distal from the suction pile preferably increases such that the to these arms mounted web becomes stretched.

The Fig. 9-12 embodiment has suspension arms the one end of which is pivotably mounted to the suction pile at fixed locations, the opposite end of which is pivotably mounted approximately midway between the ends of the outrigger arms which carry the foil. The one end of the outrigger arms is bifurcated or fork like and slide upward along the suction pile during unfolding the SSPD, which sliding movement is caused by the seabed 10 while the distance between the top of the suction pile and the seabed decreases due to continued penetration of the suction pile during its installation. Thus the orientation of the outrigger arms changes from virtually vertical or upright to substantially horizontal or lying to extend radially from the suction pile. The fixedly to the outrigger arms mounted foil unfolds in a way similar to the cloth of an unfolding umbrella and becomes stretched by the outrigger arms as soon as the SSPD arrives at its completely unfolded state. Fig. 10 illustrates the changing level of the seabed relative to the suction pile top which forces the movement of parts of the SSPD which thus unfolds.

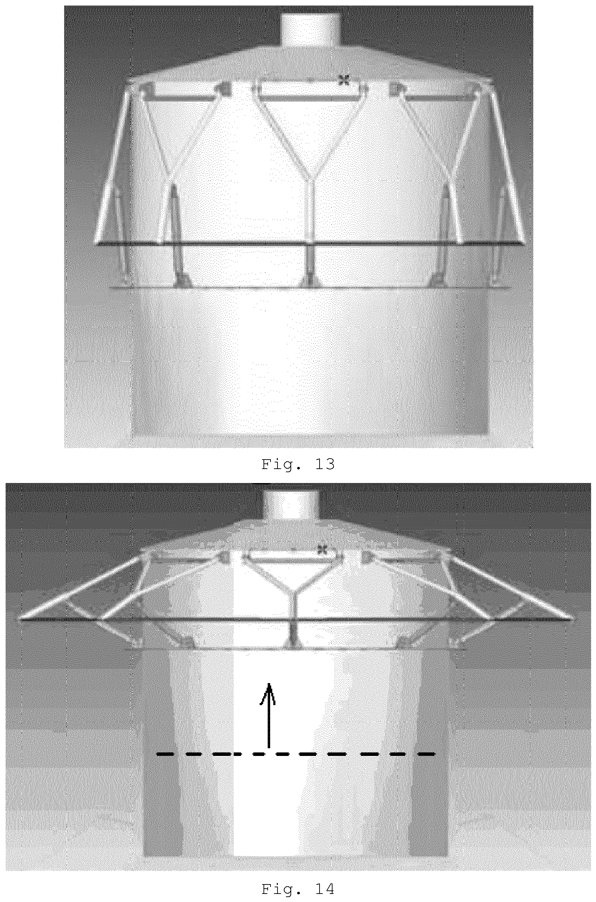

The Fig. 13-16 embodiment applies roughly the same principle as with the Fig. 9-12 embodiment, this time however the suspension arms slide with one end along the suction pile while the bifurcated end of the outrigger arms is pivotably mounted to the suction pile at fixed location. The suspension arms are forced by the relative movement between suction pile and seabed (illustrated in Fig. 14).

In the Fig. 9-16 embodiments the combination of gravity force and the suspension arms keep the SSPD biased towards the folded or retracted state.

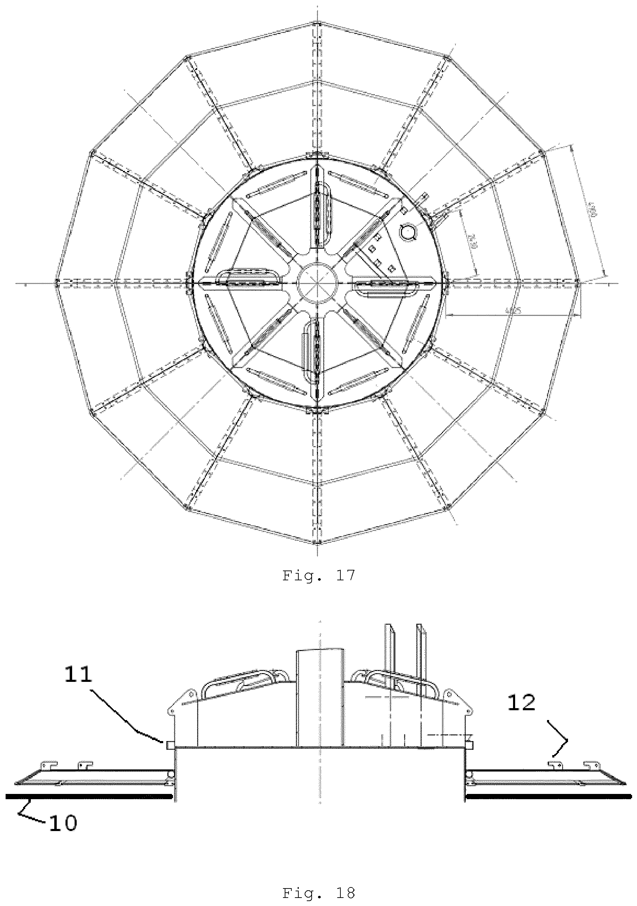

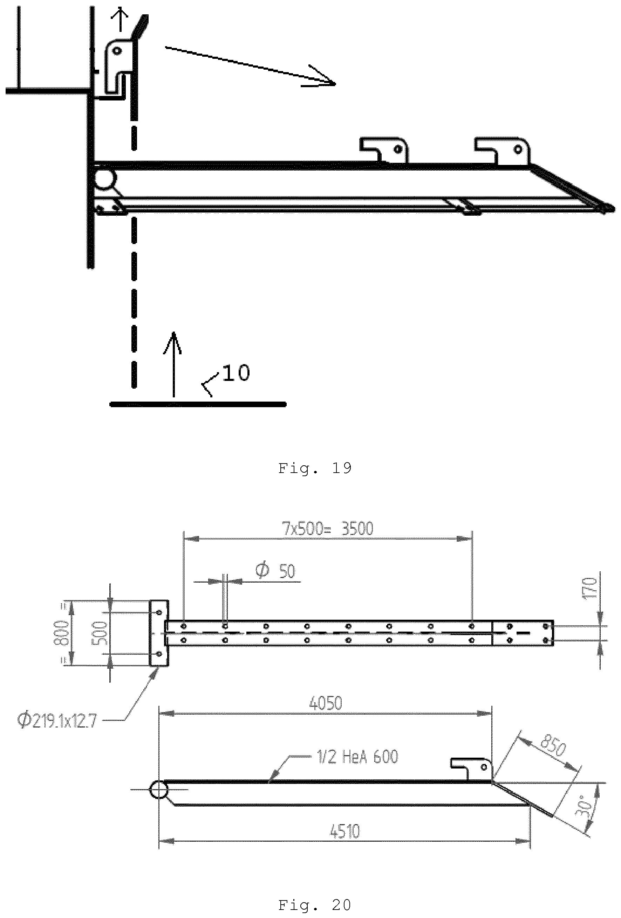

The Fig. 17-22 embodiment applies an SSPD completely separate from the suction pile, in other words no fixed connection, however since the SSPD circumferentially encircles the suction pile, preferably completely and such that the SSPD provides a closed loop around the suction pile, as in the present embodiment, there is substantial form fit between the SSPD and the suction pile such that the SSPD can freely translate lengthwise of the suction pile (thus vertically if the suction pile is oriented vertically as in operation), however is retained in the other translation directions (thus horizontally if in operation). The SSPD is kept retracted by hooking parts at the SSPD (hooks) and the suction pile (e.g. eyes) which become disengaged as soon as the SSPD is moved upward due to further penetration into the seabed. Thus with this embodiment the SSPD is maintained retracted by the combined action of gravity force and hooking parts at the outrigger arms (preferably close to the remote ends) engaging hooking parts at the suction pile (preferably close to the top) . Fig. 18 shows a sectional side view of Fig. 17. Fig. 19 shows a detail of Fig. 18 to illustrate that the hook 12 is lifted from the eye 11 and subsequently the initially vertically or upright oriented outrigger starts pivoting to become horizontally or lying oriented and extend radially from the suction pile. In this case the outrigger arm pivots downward, however upward pivoting from upright or vertical to lying or horizontal is also feasible.

In all Fig. 9-22 embodiments the outrigger arms and suspension arms have a fixed length and rigid shape. The arm ends sliding upward or downward along the suction pile are maintained in their mutual angular spacing by a means proper to the SSPD, e.g. provided by the foil which is preferably stretched at the location of these arm ends both in the retracted and extended state, or by an alongate element, e.g. a flexible pulling element, e.g. provided as a closed loop, or by rods connected to the arm ends.

Fig. 18-20 show a tapering shape of the outward end of the outrigger arms such that the web curves or angles downward to properly connect to the seafloor below, to avoid scouring below the web. Also shown is how the flange at the top of the outrigger arm extends outwardly beyond the outrigger arm web and angles or curves downward for said effect. The 30 degree angle is just an example. The height of the arm is typically 300 millimeter, thus the web above the arm is kept at a distance of 300 millimeter to the seafloor below. Fig. 20 shows the outrigger arm in top and side view.

Dimensions in the drawing are in millimetre.

The invention is not limited to the above described and in the drawings illustrated embodiments.

The invention is defined by the appended claims.

## Claims

1. Suction pile provided, preferably near its top bulkhead and possibly at a level spaced below the level of this bulkhead viewed in the upright condition of the suction pile, with an extendable or unfoldable seabed scour protection device comprising a web (1) cover or screen, when extended or unfolded, the seabed adjacent the suction pile to avoid scouring, wherein the folded protection device, surrounding the suction pile at a level between the open bottom and closed top, is suspended from hook members (12) fixed to the suction pile in such a manner that with the suction pile in the upright attitude, having the longitudinal axis vertical and the open bottom below closed top, the downward and outward movement of the top edge of the protection device relative to the suction pile is retained by the hook members and the upward relative movement is not retained by the hook members and sufficient upward relative movement causes that the protection device becomes outside the retaining influence of the hook members such that the protection device is released from the hook members such that the top edge of the protection device is allowed to move outward, and thus the protection device unfolds .

2. Suction pile according to claim 1, the extension or unfolding is gravity powered and is started due to longitudinal movement of the suction pile relative to the protection device, or vice versa.

3. Suction pile according to claim 1 or 2, the protection device comprises rigid web carrying arms, e.g. outrigger arms, which in the extended state extend radially from the suction pile and substantially horizontal and in the retracted state extend substantially vertical and when moving from retracted to extended state the spacing between the ends of these arms, distal from the suction pile, increases such that the to these arms mounted web becomes unfolded and stretched, wherein the fixedly to the outrigger arms mounted web unfolds in a way similar to the cloth of an unfolding umbrella or parasol.

4. Suction pile according to any of claims 1-3, gravity force and with hooking parts provided arms of the protection device and co-operating hooking parts at the suction pile keep the protection device biased towards the folded or retracted state.

5. Suction pile according to any of claims 1-4, the protection device is completely separate from the suction pile and/or has no fixed connection with the suction pile.

6. Suction pile according to any of claims 1-5, the protection device circumferentially encircles the suction pile completely and thus provides a completely closed loop around the suction pile and has substantial form fit with the suction pile.

7. Suction pile according to any of claims 1-6, the proximal outrigger arm ends are maintained in their mutual angular spacing around the suction pile by a means proper to the protection device, e.g. provided by the web or by a flexible pulling element provided as a closed loop around the suction pile.

8. Suction pile according to any of claims 1-7, the folded protection device has a shape similar to a cylinder and the unfolded protection device has a shape similar to a disc with central hole, in both states the suction pile fits within the protection device.

9. Suction pile according to any of claims 1-8, the web is present below the outrigger arms such that in the unfolded state the web is between these arms and the seafloor (10).

10. Suction pile according to any of claims 1-9, the outrigger arms ends adjacent the web outer edge have a shape to promote that the web outer edge properly connects to the seafloor, e.g. a tapering shape and/or a downward curved flange.

11. Suction pile according to any of claims 1-10, in the unfolded state the web at the outer edge of the protection device is at least 10% or 20% closer to the seafloor, compared to its distance at the inner edge, or connects to the seafloor while remote from this outer edge the web is spaced from the seafloor.

12. Suction pile according to any of claims 1-11, the outward outrigger arm end has a flange providing an outward extension of the outrigger arm, which flange is angled or curved towards the seafloor and the web follows the shape of the outrigger arm, such that at the outward end the web curves or angles downward to properly connect to the seafloor below.

13. Suction pile according to any of claims 1-12, the web is ballasted or made heavier at the outer edge by stones within a tube fixed to the web, to bias the web towards the seafloor.

14. Suction pile according to any of claims 1-13, the web has a rough surface provided by artificial frond (9), to collect and retain sand from the seabed.

## Patentansprüche

1. Saugpfahl, der vorzugsweise nahe seinem oberen Schott und, im aufrechten Zustand des Saugpfahls gesehen, möglicherweise auf einer Höhe unter dem Niveau dieses Schotts mit einer ausfahrbaren oder ausklappbaren Meeresboden-Kolkschutzvorrichtung versehen ist, die, in ausgefahrener oder ausgeklappter Form, ein Netz (1) zum Abdecken oder Abschirmen des Meeresbodens angrenzend an den Saugpfahl aufweist, um ein Kolken zu vermeiden,
wobei die eingeklappte Schutzvorrichtung, die den Saugpfahl auf einer Höhe zwischen dem offenen Boden und der geschlossenen Oberseite umgibt, an Hakenelementen (12) aufgehängt ist, die derart an dem Saugpfahl befestigt sind, dass, wenn sich der Saugpfahl in der aufrechten Stellung befindet, mit der Längsachse in senkrechter Stellung und dem offenen Boden unter der geschlossenen Oberseite, die Abwärts- und Auswärtsbewegung der Oberkante der Schutzvorrichtung bezüglich des Saugpfahls durch die Hakenelemente zurückgehalten wird und die relative Aufwärtsbewegung durch die Hakenelemente nicht zurückgehalten wird, und eine ausreichende relative Aufwärtsbewegung bewirkt, dass sich die Schutzvorrichtung außerhalb des Rückhalteeinflusses der Hakenelemente befindet, so dass die Schutzvorrichtung derart von den Hakenelementen gelöst wird, dass sich die Oberkante der Schutzvorrichtung nach außen bewegen kann und sich die Schutzvorrichtung somit aufklappt.

2. Saugpfahl nach Anspruch 1, wobei das Ausfahren oder Aufklappen durch Schwerkraft erfolgt und aufgrund einer Längsbewegung des Saugpfahls bezüglich der Schutzvorrichtung oder umgekehrt eingeleitet wird.

3. Saugpfahl nach Anspruch 1 oder 2, wobei die Schutzvorrichtung starre Netzhaltearme, z.B. Auslegerarme, aufweist, welche im ausgefahrenen Zustand von dem Saugpfahl radial und im Wesentlichen waagerecht verlaufen und im eingefahrenen Zustand im Wesentlichen senkrecht verlaufen, und sich bei der Bewegung aus dem eingefahrenen in den ausgefahrenen Zustand der Abstand zwischen den Enden dieser Arme distal vom Saugpfahl derart vergrößert, dass das an diesen Armen angebrachte Netz ausgeklappt und gedehnt wird, wobei sich das fest an den Auslegerarmen angebrachte Netz in einer Weise ähnlich dem Tuch eines sich entfaltenden Regenschirms oder Sonnenschirms ausklappt.

4. Saugpfahl nach einem der Ansprüche 1 bis 3, wobei die Schwerkraft und mit Hakenteilen versehene Arme der Schutzvorrichtung sowie damit zusammenwirkende Hakenteile am Saugpfahl die Schutzvorrichtung in Richtung des gefalteten oder eingefahrenen Zustands vorgespannt halten.

5. Saugpfahl nach einem der Ansprüche 1 bis 4, wobei die Schutzvorrichtung vollständig von dem Saugpfahl getrennt ist und/oder keine feste Verbindung mit dem Saugpfahl aufweist.

6. Saugpfahl nach einem der Ansprüche 1 bis 5, wobei die Schutzvorrichtung den Saugpfahl vollständig über den Umfang umgibt und somit eine vollständig geschlossene Schlinge um den Saugpfahl herum bereitstellt und im Wesentlichen formschlüssig mit dem Saugpfahl ist.

7. Saugpfahl nach einem der Ansprüche 1 bis 6, wobei die proximalen Auslegerarmenden in ihrem gegenseitigen Winkelabstand um den Saugpfahl herum durch ein für die Schutzvorrichtung geeignetes Mittel gehalten werden, z.B. bereitgestellt durch das Netz oder ein flexibles Zugelement, das als eine geschlossene Schlinge um den Saugpfahl herum vorgesehen ist.

8. Saugpfahl nach einem der Ansprüche 1 bis 7, wobei die gefaltete Schutzvorrichtung eine einem Zylinder ähnliche Form aufweist und die ausgeklappte Schutzvorrichtung eine einer Scheibe mit mittigem Loch ähnliche Form aufweist, wobei der Saugpfahl in beiden Zuständen in die Schutzvorrichtung passt.

9. Saugpfahl nach einem der Ansprüche 1 bis 8, wobei das Netz unterhalb der Auslegerarme vorliegt, so dass sich das Netz im ausgeklappten Zustand zwischen diesen Armen und dem Meeresboden (10) befindet.

10. Saugpfahl nach einem der Ansprüche 1 bis 9, wobei die Auslegerarmenden angrenzend an die Außenkante des Netzes eine Form aufweisen, die begünstigt, dass sich die Außenkante des Netzes in geeigneter Weise mit dem Meeresboden verbindet, z.B. eine sich verjüngende Form und/oder einen abwärts gebogenen Flansch.

11. Saugpfahl nach einem der Ansprüche 1 bis 10, wobei das Netz im ausgeklappten Zustand an der Außenkante der Schutzvorrichtung mindestens 10% oder 20% näher am Meeresboden im Vergleich zu seinem Abstand an der Innenkante liegt oder sich mit dem Meeresboden verbindet, während das Netz entfernt von dieser Außenkante vom Meeresboden beabstandet ist.

12. Saugpfahl nach einem der Ansprüche 1 bis 11, wobei das äußere Auslegerarmende einen Flansch aufweist, der eine Erstreckung des Auslegerarms nach außen bereitstellt, wobei der Flansch zum Meeresboden hin abgewinkelt oder gebogen ist und das Netz der Form des Auslegerarms derart folgt, dass das Netz am äußeren Ende nach unten gebogen oder abgewinkelt ist, um sich in geeigneter Weise mit dem Meeresboden darunter zu verbinden.

13. Saugpfahl nach einem der Ansprüche 1 bis 12, wobei das Netz an der Außenkante durch Steine in einem am Netz befestigten Rohr beschottert oder beschwert wird, um das Netz in Richtung des Meeresbodens vorzuspannen.

14. Saugpfahl nach einem der Ansprüche 1 bis 13, wobei das Netz eine durch künstliche Farnwedel (9) bereitgestellte raue Oberfläche aufweist, um Sand aus dem Meeresboden anzusammeln und zurückzuhalten.

## Revendications

1. Pilier à aspiration muni, de préférence près de sa cloison de dessus et éventuellement à un niveau espacé au-dessous du niveau de cette cloison vue dans l'état dressé du pilier à aspiration, d'un dispositif de protection contre l'érosion du fond marin extensible ou dépliable comprenant une toile (1) pour recouvrir ou protéger, lorsqu'il est étendu ou déplié, le fond marin adjacent au pilier à aspiration pour éviter l'érosion, dans lequel le dispositif de protection replié, encerclant le pilier à aspiration à un niveau entre le fond ouvert et le dessus fermé, est suspendu à des organes crochets (12) fixés au pilier à aspiration d'une manière telle qu'avec le pilier à aspiration dans la disposition dressée, ayant l'axe longitudinal vertical et le fond ouvert au-dessous du dessus fermé, le mouvement vers le bas et vers l'extérieur du bord supérieur du dispositif de protection par rapport au pilier à aspiration soit retenu par les organes crochets et le mouvement relatif vers le haut ne soit pas retenu par les organes crochets et un mouvement relatif vers le haut suffisant amène le dispositif de protection à être hors de l'influence de retenue des organes crochets de sorte que le dispositif de protection soit libéré des organes crochets de sorte que le bord de dessus du dispositif de protection soit permis se déplacer vers l'extérieur, et ainsi le dispositif de protection se déplie.

2. Pilier à aspiration selon la revendication 1, l'extension ou le dépliage fonctionne par gravité et est démarré en raison d'un mouvement longitudinal du pilier à aspiration par rapport au dispositif de protection, ou vice-versa.

3. Pilier à aspiration selon la revendication 1 ou 2, le dispositif de protection comprend des bras de support de toile rigides, par ex. des bras stabilisateurs, qui dans l'état étendu s'étendent radialement à partir du pilier à aspiration et sensiblement horizontalement et dans l'état rétracté s'étendent sensiblement verticalement et lors du passage de l'état rétracté à l'état étendu l'espacement entre les extrémités de ces bras, distales au pilier à aspiration, augmente de sorte que la toile montée sur ces bras soit dépliée et étirée, dans lequel la toile montée sur les bras stabilisateurs de manière fixe se déplie d'une manière similaire au voile d'un parapluie ou d'un parasol en train de se déplier.

4. Pilier à aspiration selon l'une quelconque des revendications 1 à 3, la force de gravité et avec des bras munis de parties d'accroche du dispositif de protection et des parties d'accroche coopérantes au niveau du pilier à aspiration maintiennent le dispositif de protection sollicité vers l'état replié ou rétracté.

5. Pilier à aspiration selon l'une quelconque des revendications 1 à 4, le dispositif de protection est complètement séparé du pilier à aspiration et/ou ne possède pas de liaison fixe avec le pilier à aspiration.

6. Pilier à aspiration selon l'une quelconque des revendications 1 à 5, le dispositif de protection encercle de manière circonférentielle le pilier à aspiration complètement et fournit ainsi une boucle complètement fermée autour du pilier à aspiration et possède une complémentarité de forme significative avec le pilier à aspiration.

7. Pilier à aspiration selon l'une quelconque des revendications 1 à 6, les extrémités de bras stabilisateur proximales sont maintenues dans leur espacement angulaire mutuel autour du pilier à aspiration par un moyen propre au dispositif de protection, par ex. fourni par la toile ou par un élément de traction souple prévu comme une boucle fermée autour du pilier à aspiration.

8. Pilier à aspiration selon l'une quelconque des revendications 1 à 7, le dispositif de protection replié possède une forme similaire à un cylindre et le dispositif de protection déplié possède une forme similaire à un disque ayant un trou central, dans les deux états le pilier à aspiration tient à l'intérieur du dispositif de protection.

9. Pilier à aspiration selon l'une quelconque des revendications 1 à 8, la toile est présente au-dessous des bras stabilisateurs de sorte que dans l'état déplié la toile soit entre ces bras et le fond marin (10).

10. Pilier à aspiration selon l'une quelconque des revendications 1 à 9, les extrémités de bras stabilisateurs adjacentes au bord externe de toile possèdent une forme pour faciliter le fait que le bord externe de toile se relie correctement au fond marin, par ex. une forme effilée et/ou une bride incurvée vers le bas.

11. Pilier à aspiration selon l'une quelconque des revendications 1 à 10, dans l'état déplié la toile au niveau du bord externe du dispositif de protection est au moins 10 % ou 20 % plus proche du fond marin, comparativement à sa distance au bord interne, ou se relie au fond marin tandis qu'à distance de ce bord externe la toile est espacée du fond marin.

12. Pilier à aspiration selon l'une quelconque des revendications 1 à 11, l'extrémité de bras stabilisateur extérieure possède une bride fournissant une extension vers l'extérieur du bras stabilisateur, laquelle bride est inclinée ou incurvée vers le fond marin et la toile suit la forme du bras stabilisateur, de sorte qu'à l'extrémité extérieure la toile s'incurve ou s'incline vers le bas pour se relier correctement au fond marin au-dessous.

13. Pilier à aspiration selon l'une quelconque des revendications 1 à 12, la toile est lestée ou alourdie au niveau du bord externe par des pierres à l'intérieur d'un tube fixé à la toile, pour solliciter la toile vers le fond marin.

14. Pilier à aspiration selon l'une quelconque des revendications 1 à 13, la toile possède une surface rugueuse fournie par une fronde artificielle (9), pour collecter et retenir du sable provenant du fond marin.
